Europäisches Patentamt

European Patent Office

Office européen des brevets

(11) Publication number: **0 633 232 A1**

## EUROPEAN PATENT APPLICATION

(21) Application number: 94305049.2

(22) Date of filing: 08.07.94

(51) Int. Cl.6: **C04B 35/484**, C01G 25/02

(30) Priority: 08.07.93 JP 169212/93

(43) Date of publication of application:
**11.01.95 Bulletin 95/02**

(84) Designated Contracting States:
**DE FR GB**

(71) Applicant: **JAPAN ABRASIVE CO., LTD.**
**90, Ishizukita-machi**
**Sakai**
**Osaka (JP)**

(72) Inventor: **Tamamaki, Masahiro**
**c/o Japan**
**AbrasiveCo.Ltd,of90,Ishizukita-machi**
**Sakai, Osaka (JP)**
Inventor: **Onoda, Yoshihiro**
**c/o Japan**
**AbrasiveCo.Ltd,of90,Ishizukita-machi**
**Sakai, Osaka (JP)**
Inventor: **Tsuda, Koji**
**c/o Japan**
**AbrasiveCo.Ltd,of90,Ishizukita-machi**
**Sakai, Osaka (JP)**

(74) Representative: **Carter, Caroline Ann et al**
**ABEL & IMRAY**
**Northumberland House**
**303-306 High Holborn**
**London WC1V 7LH (GB)**

(54) Fused zirconia refractory materials, method for producing the same and refractory products.

(57) Fused zirconia refractory materials have less content of $SiO_2$, high particle strength and hardness and advantageously less content of radioactive elements, particularly non-stabilized, partially or fully stabilized fused zirconia refractory materials obtained from desilicated zirconia derived from zircon. The refractory materials have 0.01 to 0.5 wt. % $SiO_2$, a crystal size of larger than 50 $\mu$m, particle strength of 30 kgf, hardness of at least 10 GPa and preferably have a total amount of U and Th being below 1,000 ppm. Refractory products using said materials as well as methods for producing said materials by an electrofusion process are described.

EP 0 633 232 A1

This invention relates to a fused zirconia refractory material which may be used for producing heat-resistant and corrosion-resistant refractory products such as a long nozzle brick, tundish nozzle brick, submerged nozzle brick or sliding gate nozzle brick to be used in a continuous casting method, tundish furnace, ladle, crucible for melting metals or setter plate for annealing electronic part, or used for placing powder, ceramic pigment, abrasive, thermal spray powders used for thermal barrier or thermal spray powders of solid electrolyte, and particularly to a fused zirconia refractory material using a desilicated zirconia material made from zircon, a method for producing the same and a refractory product made with the same.

Having the properties such as a high melting point of about $2700°C$, high corrosion resistance and low thermal conductivity, zirconia($ZrO_2$) has been generally used for refractory materials.

Zirconium(Zr) has a wide distribution in the earth's crust. The proportion of zirconium is 0.026%, nearly equal to carbon and 2.5 times of Cu, 5 times of Zn, of general components of the earth's crust. Accordingly, zirconium is one of the elements to be used stably as an industrial material. Zr is obtained in the form of oxide, i.e. $ZrO_2$ -baddeleyite, in the form of a compound with $SiO_2$, i.e. $ZrSiO_4$ - zircon, or in the form of composite oxides with other elements. Used for industrial materials is zircon(zircon sand) or baddeleyite.

$ZrO_2$ content in the zircon sand is as low as 67%, but the zircon sand distributes as a placer deposit in a wide region in the world, e.x. in Australia, South Africa, India, Malaysia, U.S.A. It is easy to mine and refine. Accordingly, it has been widely used as zirconia materials.

The purity of $ZrO_2$ in baddeleyite being as high as 96%, baddeleyite is a superior zirconia material of high quality. Main producing district is limited to South Africa and Brazil. Baddeleyite in Brazil, however, includes a high content of radioactive substances such as uranium(U), thorium(Th), etc. and an export restriction is made by the Brazilian government. Accordingly, the producing district is substantially limited to South Africa. Baddeleyite in South Africa, however, is not fully satisfactory for industrial materials in view of deposits, mining method, quality transition. Minerals including radioactive substances such as U, Th, etc. are separated by using the difference of gravity. By the reason of existence of residual radioactive elements, zirconia materials obtained must be treated at more severe environmental conditions than zircon.

Fused zirconia refractory materials have been produced by fusing baddeleyite or zircon sand at a high temperature in an electric arc furnaces. Zircon is desilicated by adding carbon materials Stabilized zirconia is obtained by adding a stabilizer such as CaO, MgO, $Y_2O_3$ etc. Roasting for oxidization is executed at around $1400°C$ to change zirconium monoxide and zirconium cyano-nitride induced in the course of electrofusion process complete oxides. Baddeleyite is fused without using carbon materials.

More detailed description is given in the following using CaO as a stabilizer.

[Producing method with baddeleyite]

Baddeleyite is fused in an electric arc furnace together with quicklime. The additive amount of quicklime is generally about 4 wt% calculated as CaO. The fused material is naturally cooled to obtain an ingot. Said ingot is then crushed and refined into particles having a particle size between #8-average particle size of about 2 mm and #350F-average particle size of about 1 $\mu$m. The particles are then roasted and oxidized at $1400°C$ to obtain CaO partially stabilized $ZrO_2$ refractory materials.

Fused zirconia refractory materials thus obtained contain less unavoidable impurities such as $SiO_2$, $Al_2O_3$, i.e. less than 0.3wt% respectively. Crystal size is larger than 300 $\mu$m and the grain strength and hardness is high, so that the materials obtained are superior as refractory materials.

[Producing method with zircon sand]

Zircon sand has a lower content of pure $ZrO_2$ and a higher content of $SiO_2$, i.e. about 33% of $SiO_2$, so that desilicating process is simultaneously executed. For this purpose, zircon sand, carbon for reducing agent and quicklime for stabilizer are mixed and fused in an electric arc furnace. Other processes are the same with baddeleyite.

Reaction equation of desilicating is theoretically shown as follows:

$$ZrSiO_4 + C \rightarrow ZrO_2 + SiO\uparrow + CO\uparrow$$

Added Ca components are retained in $ZrO_2$ in the form of solid solution as a stabilizer. Si components in $ZrSiO_4$ is atomized in the air as fumed silica and changes into active micro silica($SiO_2$, amorphous). Thin producing method is superior in that less expensive and abundant zircon sand is used and partially or fully stabilized fused zirconia refractory materials can be obtained easily.

2

These conventional fused zirconia refractory materials, however, are not fully satisfactory in view of the following points.

In the case of baddeleyite, although the quality is superior for fused zirconia refractory materials, there have been such problems that baddeleyite has a higher content of radioactive elements and the producing district is limited to South Africa and the deposits are restricted and further the producing amount is also restricted because baddeleyite is produced as by-products of copper ores or phosphorus ores. Furthermore residual copper and phosphorus in baddeleyite badly affect a setter plate for sintering ceramic materials used for electronic parts.

In the case of zircon sand, although the problems of radioactive elements and deposits can be disregarded, residual $SiO_2$ contained is as high as about 0.8% in a partially stabilized regular refractory material. Crystal size is as small as about 100 $\mu$m and the particle strength and hardness is poor, so that the quality is inferior to that of baddeleyite.

It is therefore an object of the present invention to solve at least some of the above problems and to provide fused zirconia refractory materials of high quality containing less amount of $SiO_2$ badly affecting the material properties, having a large crystal size, having a higher particle strength and hardness, containing less amount of radioactive elements which causes environmental pollution and the materials of which are easily obtainable, and further to provide refractory products using said fused zirconia refractory materials. It is a further object of the present invention to provide a method for producing said fused zirconia refractory materials in an efficient and stable manner.

In accordance with the present invention, desilicated zirconia materials derived from zircon are used to obtain either non-stabilized fused zirconia refractory materials containing $SiO_2$ of 0.01-0.5 wt%, having a crystal size of larger than 50 $\mu$m in substantially all crystals, having a particle strength of at least 30 kgf and hardness of at least 10 GPa, or partially or fully stabilized fused zirconia refractory materials containing $SiO_2$ of 0.01-0.5 wt%, having a crystal size of larger than 300 $\mu$m in substantially all crystals, having a particle strength of at least 30 kgf and hardness of at least 11 GPa. Fused zirconia refractory materials obtained in accordance with the present invention have superior quality than the conventional partially or fully stabilized fused zirconia refractory materials derived from baddeleyite. The content of radioactive elements such as U and Th may be, and preferably is, below 1,000 ppm in total and there is no problem of environmental pollution. Further zircon is easily obtainable, so that there is no problem of materials.

In the present invention, zircon is selected as starting material, so that the problems of radioactive elements and material supply are solved.

Desilicated zirconia derived from the zircon is used, so that the content of $SiO_2$, which badly affects the properties of materials, is small and the crystal size is large and the particle strength and hardness is high. Accordingly fused zirconia refractory materials having superior quality as refractories are obtainable. Refractory products produced by said fused zirconia refractory materials have also superior quality.

In partially or fully stabilized fused zirconia refractory materials, it is preferred that the content of $SiO_2$ is 0.01-0.5 wt%. In the case of higher content than 0.5 wt.%, free silica ($SiO_2$) tends to precipitate at crystal grain boundaries which results in the deterioration of the particle strength and heat resistance and corrosion resistance peculiar to zirconia. The content of $SiO_2$ may be reduced below 0.01 wt% and occasionally superior quality may be expected. But the purity of desilicated zirconia shall be extremely high, which is not practical in industrial production. Reducing the content of $SiO_2$ to a high degree by adding excess coke as reducing agent causes a large amount of low oxides($ZrO_{2-x}$), ZrC etc., which results in the reduction of particle strength.

Crystal size is preferred to be larger than 300 $\mu$m so as to obtain a large single crystal grain having less grain boundaries, so that superior properties of zirconia are induced. Having a large crystal size and containing less impurities such as $SiO_2$, fused zirconia refractory materials obtained have a particle strength of at least 30 kgf and hardness of at least 11 GPa. These values are superior than conventional fused zirconia refractory materials derived from baddeleyite and partially or fully stabilized. In the case of lower value, there may occur fracture in a grain which constitutes refractories and also the amount of dissolving destruction becomes large.

In non-stabilized fused zirconia refractory materials, the content of $SiO_2$ is also preferred to be 0.01-0.5 wt% by the same reason described above. The above partially or fully stabilized fused zirconia is liable to cause grain growth because of the existence of stabilizer. On the contrary, non-stabilized fused zirconia does not contain stabilizer, a crystal size of at least 50 $\mu$m is defined, which equals to that of fused zirconia materials derived from baddeleyite. As the usage thereof is mainly directed to finely crushed materials having a particle size such as #100-average particle size of about 100 $\mu$m, there is no problems when the crystal size is as small as conventional degree.

3

The total amount of radioactive elements, U and Th is advantageously below 1,000 ppm in order to attain such a level as being at most 1/2 of that of the conventional materials derived from baddeleyite. In view of the reduction of radioactive elements, such materials obtained in accordance with the present invention are substituted for all the conventional materials derived from baddeleyite. Namely, the materials may be used for heat resistant refractory materials, abrasive materials, flame spraying powders or ceramic materials of $Al_2O_3$-$ZrO_2$, $ZrO_2$-$TiO_2$, $ZrO_2$-$CaO(CaZrO_3)$, $ZrO_2$-$Al_2O_3$-$SiO_2$-(zirconia-mullite) or $ZrO_2$-$Al_2O_3$-$MgO$(zirconia-spinel) system.

Mixing with the conventional materials derived from baddeleyite is also effective to reduce the total amount of radioactive elements.

The stabilizer for partially or fully stabilized fused zirconia refractory materials is preferably at least one member selected from the group consisting of CaO, MgO, $Y_2O_3$ or rare earth oxides including $Y_2O_3$. In case only rare earth oxides such as $CeO_2$, $Yb_2O_3$, $Gd_2O_2$, $Sm_2O_3$, $La_2O_3$, $Nd_2O_3$, $Er_2O_3$ etc. are used as stabilizer, the additive amount thereof shall be extremely increased, which results in very expensive refractory materials. Accordingly, the refractory materials obtained cannot be used for a general usage but for a special usage such as flame spraying powders.

The fused zirconia refractory materials in accordance with the invention may be produced using desilicated zirconia materials derived from zircon by a usual electrofusion process, e.g. fusing process in an electric arc furnace. The present invention provides a method for producing non-stabilized, partially stabilized or fully stabilized fused zirconia refractory materials comprising fusing a desilicated zirconia material derived from zircon or the mixture of said material with at least one stabilizer, preferably selected from the group consisting of CaO, MgO, $Y_2O_3$ or rare earth oxides including $Y_2O_3$, in an electric arc furnace, cooling naturally to obtain an ingot, crushing the ingot and refining and oxidizing and annealing the crushed materials. The purity of $ZrO_2$ in the desilicated zirconia materials is preferred to be at least 95 % and more preferably at least 99 %. A lower purity generally results in a lower quality because the content of $SiO_2$ may become higher than 0.5 wt. % as in the case of the conventional materials derived from zircon sand. In case the purity of $ZrO_2$ is higher than 99 %, the content of $Fe_2O_3$, $Al_2O_3$ which is deemed to be unavoidable impurities for fused zirconia refractory materials can be reduced to a great extent.

The present invention provides non-stabilized fused zirconia refractory materials having a $SiO_2$ content of 0.01 to 0.5 wt. %, crystal size of larger than 50 $\mu$m in substantially all particles, particle strength of at least 30 kgf and hardness of at least 10 GPa, and also provides partially or fully stabilized fused zirconia refractory materials having a $SiO_2$ content of 0.01 to 0.5 wt. %, crystal size of larger than 300 $\mu$m in substantially all particles, particle strength of at leapt 30 kgf and hardness of at least 11 GPa. The materials obtained have superior quality than the conventional partially or fully stabilized fused zirconia refractory materials derived from baddeleyite. The total amount of radioactive elements such as U and Th may be below 1,000 ppm and there is no problem of environmental pollution. Besides, there being no problem of material supply, extremely practical and superior fused zirconia refractory materials are obtained.

The method for producing the fused zirconia refractory materials in accordance with the present invention which comprises fusing by an electrofusion process, cooling naturally, crushing and refining and oxidizing and annealing the crushed materials can provide superior refractory materials having a large crystal size, high particle strength and high hardness in an efficient, stable and easy process, so that the method is superior than a binding method using a binder, annealing method or sintering method. Furthermore, the refractory products using the above fused zirconia refractory materials possesses the advantages owned by the materials.

## EXAMPLES

Used as a desilicated zirconia derived from zircon was desilicated zizconia-A2(95% $ZrO_2$) and desilicated zirconia-B(99% $ZrO_2$). Used as a stabilizer was quicklime(98% CaO) for CaO, magnesia clinker-(98% MgO) for MgO, high purity yttrium oxide(99% $Y_2O_3$) for $Y_2O_3$ and low purity yttrium oxide(about 60% $Y_2O_3$, residue $RO_x$:composite oxide of rare earth oxides). For comparison purpose, zircon sand(67% $ZrO_2$) and baddeleyite(99% $ZrO_2$) were also used. Chloride or fluoride of Ca, Mg, Y may be also used as a stabilizer, although oxide thereof is preferred.

Shown in Table 1 is a chemical composition and mineral composition of the above zirconia materials. Quantitative determination of zircon was made using a X-ray powder diffraction method as follows. Zircon and zirconia reagent(99.9% $ZrO_2$) were mixed in a certain proportion to prepare a calibration graph and the content of zircon was determined by amending the intensity ratio of X-ray diffraction peak. The content of free $SiO_2$ was theoretically calculated from a chemical analysis value of $SiO_2$ and the content value of zircon($ZrSiO_4$) obtained as above.

4

Materials mixed as shown in Table 2 were fused in an electric arc furnace with the secondary voltage of 95V, average loading electric power of 300 kW, total operation time of two hours and total amount of electric power of 600 kWh. The materials containing a large amount of $SiO_2$ were mixed with cokes as a reducing agent in an amount as shown in the Table. Graphite powders may be also used instead of cokes as a reducing agent.

Desilicated zirconia-A having the purity of 95% $ZrO_2$ is shown as A1 type and A2 type. In the embodiments, A2 type was used which contained less $ZrSiO_4$ in the mineral composition, because free $SiO_2$ is easily removed compared with the compound $ZrSiO_4$.

After the operation, fused materials were cooled naturally in an atmosphere to obtain an ingot. The ingot obtained was then crushed into particles of below 3 mm using a crusher such as jaw crusher or roll crusher. Oxidizing and annealing treatment were then conducted using a gas furnace to remove a carbide or dioxide induced in the fusing process and also to remove a strain caused in a crystal by quenching in the cooling process. Said treatment was effected in such a manner that the temperature was raised up to 1400°C at the rate of 5°C/min. and kept unchanged for three hours and thereafter was cooled to room temperature at the rate of 5°C/min. Samples thus obtained were classified by using a sieve to obtain the particles of 2.8-2.36 mm for measurement of chemical components, crystal size, hardness, particle strength and stabilization rate as shown in Table 3.

Table 1

| materials | zircon material | zirconia material | desilicated zirconia material | | |
|---|---|---|---|---|---|
| | zircon sand | baddeleyite | A1 | A2 | B |
| chemical components(%) | | | | | |
| *$ZrO_2$ + $HfO_2$ | 66.7 | 99.0 | 95.2 | 95.4 | 98.8 |
| $SiO_2$ | 32.7 | 0.50 | 4.15 | 4.16 | 0.84 |
| $TiO_2$ | 0.14 | 0.30 | 0.20 | 0.15 | 0.12 |
| $Fe_2O_3$ | 0.02 | 0.05 | 0.02 | 0.02 | 0.01 |
| $Al_2O_3$ | 0.11 | - | 0.40 | 0.18 | 0.10 |
| U (ppm) | 320 | 1200 | 320 | 300 | 240 |
| Th(ppm) | 220 | 780 | 220 | 210 | 180 |
| Mineral composition(%) | | | | | |
| m-$ZrO_2$ | 0.5 | 98.5 | 96.0 | 96.0 | 99.0 |
| $ZrSiO_4$ | 99.5 | 1.5 | 4.0 | 0.5 | 0.1 |
| free $SiO_2$ | - | - | - | 3.5 | 0.8 |

*$ZrO_2$ + $HfO_2$ :balance

Table 2

| Zirconia materials | No. | Composition of material (kg) | | | | | |
|---|---|---|---|---|---|---|---|
| | | $ZrO_2$ | CaO | MgO | $Y_2O_3$ | *mixed | cokes(C) |
| **Embodiments** | | | | | | | |
| desilicated zirconia-A (96% $ZrO_2$) | 1 | 200 | | | | | 1 |
| | 2 | 195 | 5 | | | | 1 |
| | 3 | 192 | 8 | | | | 1 |
| | 4 | 180 | 20 | | | | 1 |
| | 5 | 144 | 56 | | | | 1 |
| | 6 | 193 | | 7 | | | 1 |
| | 7 | 184 | | | 16 | | 1 |
| | 8 | 192 | 7 | | 1 | | 1 |
| | 9 | 191 | 7 | | | 2 | 1 |
| desilicated zirconia-B (99% $ZrO_2$) | 10 | 200 | | | | | |
| | 11 | 195 | 5 | | | | |
| | 12 | 192 | 8 | | | | |
| | 13 | 180 | 20 | | | | |
| | 14 | 184 | | | 16 | | |
| **Comparison** | | | | | | | |
| baddeleyite (99% $ZrO_2$) | 15 | 200 | | | | | |
| | 16 | 195 | 5 | | | | |
| | 17 | 192 | 8 | | | | |
| | 18 | 180 | 20 | | | | |
| | 19 | 144 | 56 | | | | |
| | 20 | 193 | | 7 | | | |
| | 21 | 184 | | | 16 | | |
| | 22 | 192 | 7 | | 1 | | |
| | 23 | 191 | 7 | | | 2 | |
| zircon sand (67% $ZrO_2$) | 24 | 299(200) | | | | | 20 |
| | 25 | 291(195) | 5 | | | | 20 |
| | 26 | 287(192) | 8 | | | | 19 |
| | 27 | 267(180) | 20 | | | | 18 |
| | 28 | 275(184) | | | | | 18 |

*Mixed: mixture of yttrium oxide(about 60% $Y_2O_3$) and composite rare earth oxides

EP 0 633 232 A1

Table 3

EMBODIMENTS

### Sample No.

| | 1 | 2 | 3 | 4 | 5 | 6 | 7 | 8 | 9 | 10 | 11 | 12 | 13 | 14 |
|---|---|---|---|---|---|---|---|---|---|---|---|---|---|---|
| **Chemical Composition (wt%)** | | | | | | | | | | | | | | |
| $SiO_2$ | 0.07 | 0.08 | 0.08 | 0.09 | 0.12 | 0.20 | 0.07 | 0.07 | 0.08 | 0.05 | 0.05 | 0.06 | 0.07 | 0.08 |
| $Al_2O_3$ | 0.13 | 0.13 | 0.12 | 0.12 | 0.12 | 0.12 | 0.12 | 0.12 | 0.12 | 0.09 | 0.08 | 0.07 | 0.08 | 0.07 |
| $Fe_2O_3$ | 0.03 | 0.03 | 0.03 | 0.03 | 0.03 | 0.03 | 0.03 | 0.03 | 0.03 | 0.02 | 0.02 | 0.02 | 0.02 | 0.02 |
| **Radioactive element (ppm)** | | | | | | | | | | | | | | |
| U | 250 | 250 | 240 | 220 | 170 | 240 | 210 | 230 | 220 | 240 | 230 | 220 | 210 | 190 |
| Th | 100 | 100 | 90 | 85 | 70 | 95 | 80 | 90 | 85 | 90 | 90 | 80 | 75 | 70 |
| **Average particle size (μm)** | | | | | | | | | | | | | | |
| | 100 | 800 | 1000 | 1200 | 500 | 1500 | 1400 | 1200 | 1200 | 120 | 1000 | 1200 | 1300 | 2000 |
| **Hardness $Hv_{100}$ (GPa)** | | | | | | | | | | | | | | |
| | 10.2 | 11.3 | 11.8 | 12.0 | 11.0 | 11.3 | 12.7 | 12.2 | 12.2 | 10.5 | 11.5 | 12.1 | 11.2 | 12.8 |
| **Particle strength (kgf)** | | | | | | | | | | | | | | |
| | 52 | 55 | 52 | 35 | 32 | 50 | 52 | 62 | 64 | 53 | 55 | 52 | 32 | 52 |
| **Stabilization rate (%)** | | | | | | | | | | | | | | |
| Original | 0 | 62 | 80 | 100 | 100 | 5 | 100 | 80 | 75 | 0 | 62 | 80 | 100 | 100 |
| After thermal shock | 0 | 42 | 60 | 85 | 86 | 5 | 100 | 78 | 70 | 0 | 44 | 60 | 86 | 100 |
| Reduction rate | – | 32 | 25 | 15 | 14 | 0 | 0 | 2.5 | 6.7 | – | 29 | 25 | 14 | 0 |
| **Dissolving destruction (index)** | | | | | | | | | | | | | | |
| | – | 95 | 100 | 120 | 180 | – | 40 | 40 | 45 | – | 90 | 95 | 170 | 35 |

EP 0 633 232 A1

## Table 3-Continue

### COMPARISON EXAMPLES

#### Sample No.

| | 15 | 16 | 17 | 18 | 19 | 20 | 21 | 22 | 23 | 24 | 25 | 26 | 27 | 28 |
|---|---|---|---|---|---|---|---|---|---|---|---|---|---|---|
| **Chemical Composition (wt%)** | | | | | | | | | | | | | | |
| $SiO_2$ | 0.12 | 0.13 | 0.15 | 0.17 | 0.20 | 0.30 | 0.12 | 0.12 | 0.15 | 0.80 | 0.75 | 0.70 | 0.78 | 0.82 |
| $Al_2O_3$ | 0.04 | 0.04 | 0.04 | 0.04 | 0.03 | 0.03 | 0.04 | 0.03 | 0.03 | 0.40 | 0.38 | 0.37 | 0.35 | 0.32 |
| $Fe_2O_3$ | 0.10 | 0.10 | 0.09 | 0.05 | 0.08 | 0.07 | 0.08 | 0.08 | 0.06 | 0.03 | 0.03 | 0.03 | 0.03 | 0.03 |
| **Radioactive element (ppm)** | | | | | | | | | | | | | | |
| U | 990 | 980 | 960 | 900 | 970 | 930 | 920 | 930 | 940 | 280 | 280 | 250 | 230 | 220 |
| Th | 700 | 690 | 640 | 620 | 640 | 630 | 640 | 650 | 640 | 110 | 110 | 100 | 90 | 80 |
| **Average particle size ($\mu$m)** | | | | | | | | | | | | | | |
| | 100 | 800 | 1000 | 1200 | 500 | 1500 | 1400 | 1200 | 1200 | 35 | 80 | 100 | 150 | 250 |
| **Hardness $Hv_{100}$ (GPa)** | | | | | | | | | | | | | | |
| | 10.1 | 11.2 | 11.8 | 12.0 | 11.0 | 11.2 | 12.6 | 12.1 | 12.2 | 9.3 | 10.3 | 10.4 | 10.0 | 10.4 |
| **Particle strength (kgf)** | | | | | | | | | | | | | | |
| | 50 | 55 | 52 | 35 | 32 | 50 | 52 | 62 | 64 | 25 | 24 | 22 | 20 | 24 |
| **Stabilization rate (%)** | | | | | | | | | | | | | | |
| Original | 0 | 60 | 80 | 100 | 100 | 5 | 100 | 80 | 75 | 0 | 62 | 85 | 100 | 100 |
| After thermal shock | 0 | 40 | 60 | 85 | 86 | 4 | 100 | 78 | 70 | 0 | 30 | 40 | 55 | 60 |
| Reduction rate | − | 33 | 25 | 15 | 14 | 25 | 0 | 2.5 | 6.7 | − | 52 | 53 | 45 | 40 |
| **Dissolving destruction (index)** | | | | | | | | | | | | | | |
| | − | 95 | 100 | 120 | 180 | − | 40 | 40 | 45 | − | 210 | 220 | 240 | 210 |

Chemical components:

Determined as follows.

$SiO_2$, $Al_2O_3$ : X-ray fluorescence analysis machine

$Fe_2O_3$ : absorptiometry method

U and Th : $\gamma$-ray spectrum analysis method

Particle strength:

Compressive strength per grain measured by using a universal strength testing machine(AUTOGRAPH of Shimazu Corporation). 50 particles were measured in each sample and average value was determined.

Hardness:

Vickers hardness measured by a micro hardness meter of Akashi Seisakusho in accordance with the provision of JIS Z-2244

Stabilization rate:

Ratio of the sum of cubic phase and tetragonal phase to total zirconia phase determined using X-ray powder diffraction method and the following arithmetic equation can be used for measuring the stabilization rate $I_{(C+T)}$ (%) on the basis of diffraction peak intensity of cubic $I_C$ (111) tetragonal $I_T$ (111) monoclinic $I_M$ -(11$\bar{1}$)and $I_M$ (111)

$$I_{(C+T)} \simeq \frac{I_C\,(111) + I_M\,(111) + I_M\,(\bar{1}11)}{I_C\,(111) + I_T\,(111) + I_M\,(11\bar{1}) + I_M\,(111)} \times 100$$

Thermal shock test:

Test of destabilization due to a heat cycle wherein the samples were subjected to a thermal shock test which repeated the cycle 10 times comprising heating the samples at 1450°C for 10 minutes in ERREMA furnace and thereafter cooling by water

Reduction rate(%):

Difference between an original value and a value after thermal shock to the original value

Dissolving destruction:

Test of corrosion resistance wherein test pieces of zirconia-carbon system of 20x20x100 mm were prepared by mixing 80 parts by weight of the above samples below 3 mm, 13 parts by weight of F.C. and 7 parts by weight of SiC and said test pieces were subjected to a corrosion test using a cryptol furnace. In addition to said test pieces, iron and continuous casting powder were loaded. After one hour operation at 166°C, the test pieces were cooled and dissolving destruction was determined at a cut surface. The results are shown in the form of index by setting the amount of dissolving destruction of Sample No. 17(CaO stabilized $ZrO_2$ derived from baddeleyite-conventional regular refractory material) to be 100.
Following results were obtained in Table 3.

Chemical components:

In the conventional materials derived from baddeleyite,the content of $Al_2O_3$ is as low as below 0.5 wt%, but the content of $SiO_2$ is 0.12-0.30 wt% and the content of $Fe_2O_3$ is 0.05-0.10 wt%, which show rather high value. In the case of zircon materials, $SiO_2$ is 0.70-0.82 wt% and $Al_2O_3$ is 0.32-0.40 wt%, which show extremely high value. On the contrary, in the embodiments, $SiO_2$ is 0.05-0.20 wt%, $Fe_2O_3$ is below 0.03 wt% and $Al_2O_3$ is below 0.15 wt%, which show superior value.
As to the radioactive elements(U, Th) in the conventional materials derived from baddeleyite, U is as high as 900-980 ppm and Th is as high as 620-700 ppm. On the contrary, in the case of zircon materials and the embodiments, U is about 1/3-1/4 and Th is about 1/6-1/7.

Crystal size:

In the zircon materials, the average crystal size is 35μm in substantially non-stabilized materials and 80-250 μm in partially or fully stabilized materials. On the contrary, in the baddeleyite materials and the embodiments, non-stabilized materials are 100-120 μm and partially or fully stabilized materials are 500-2000 μm.

Hardness:

Substantially non-stabilized materials derived from zircon sand are 9.3 GPa, and 10.0-10.4 GPa in partially or fully stabilized materials. On the contrary, in the case of baddeleyite materials and the embodiments, non-stabilized materials are 10.1-10.5 GPa and partially or fully stabilized materials are 11.0-12.8 GPa.

Particle strength:

In the case of zircon sand, non-stabilized materials are 25 kgf and 20-24 kgf in partially or fully stabilized materials. On the contrary, in the case of baddeleyite materials and the embodiments, 50-53 kgf in non-stabilized materials and 32-64 kgf in partially or fully stabilized materials.

Stabilization rate:

Reduction rate of zircon sand materials is higher than 40% and destabilization is intensive. On the contrary, in the case of baddeleyite materials and embodiments, reduction rate is below 35%.

Dissolving destruction:

Zircon sand materials show the dissolving destruction of higher than 200, while the dissolving destruction of baddeleyite materials and embodiments is as low as 40-180. By the way, non-stabilized materials and MgO stabilized materials were difficult to prepare the specimen and dissolving destruction was not determined.

As apparent from the above, the fused zirconia refractory materials using desilicated zirconia derived from zircon shows the advantage in the content of $SiO_2$, crystal size and particle strength compared with the conventional fused zirconia refractory materials derived from baddeleyite, and also superior in destabilization resistance in a heat cycle, particle strength and corrosion resistance than the conventional materials derived from zircon.

Besides, in accordance with the present invention, material supply is stable and the total amount of radioactive elements U and Th contained in the fused zirconia refractory materials can be less than below 1/2 that of the conventional materials derived from baddeleyite. The refractory products using the fused zirconia refractory materials are superior in quality. The producing method is advantageous in obtaining the refractory materials having a large crystal size, high particle strength and high hardness.

The present invention provides a method for producing non-stabilized, partially or fully stabilized fused zirconia refractory material comprising fusing a desilicated zirconia material derived from zircon, or a mixture of a desilicated zirconia material (derived from zircon) with at least one stabilizer, preferably selected from CaO, MgO, $Y_2O_3$, and rare earth oxides containing $Y_2O_3$, in an electrofusion process, optionally in the presence of a reducing agent, for example, carbon, cooling to obtain a solid material, crushing, and preferably refining, the solid material, and oxidizing and annealing the crushed material.

The present invention also provides for products comprising or produced using a fused zirconia refractory material provided by the present invention or a material produced by a method provided by the present invention.

**Claims**

1. A non-stabilized fused zirconia refractory material obtained from a desilicated zirconia material derived from zircon, the refractory material having an $SiO_2$ content of 0.01 to 0.5 wt. %, a crystal size of greater than 50 μm for substantially all crystals, a particle strength of at least 30 kgf and a hardness of at least 10 GPa.

2. A material as claimed in claim 1, wherein the total amount of radioactive elements, U and Th contained therein is below 1,000 ppm.

3. A partially or fully stabilized fused zirconia refractory material obtained from a desilicated zirconia material derived from zircon, the refractory material having an $SiO_2$ content of 0.01 to 0.5 wt. %, a crystal size of greater than 300 $\mu$m for substantially all crystals, a particle strength of at least 30 kgf and a hardness of at least 11 GPa.

4. A material as claimed in claim 3, wherein the total amount of radioactive elements, U and Th, contained therein is below 1,000 ppm.

5. A method for producing a non-stabilized, partially or fully stabilized fused zirconia refractory material comprising fusing a desilicated zirconia material derived from zircon or a mixture of a desilicated zirconia material with at least one stabilizer in an electrofusion process, optionally in the presence of a reducing agent, cooling to obtain a solid material, crushing, and preferably refining, the solid material, and oxidizing and annealing the crushed material.

6. A method for producing a non-stabilized, partially or fully stabilized fused zirconia refractory material comprising fusing a desilicated zirconia material derived from zircon or a mixture of a desilicated zirconia material with at least one stabilizer in an electric arc furnace, cooling naturally to obtain an ingot, crushing and refining the ingot and oxidizing and annealing the crushed material.

7. A method as claimed in claim 5 or claim 6, wherein a stabilizer is used and is selected from the group consisting of CaO, MgO, $Y_2O_3$ and rare earth oxides containing $Y_2O_3$.

8. A method as claimed in any one of claims 5 to 7, wherein the purity of $ZrO_2$ in the desilicated zirconia is at least 95 %.

9. A method as claimed in any one of claims 5 to 7, wherein the purity of $ZrO_2$ in the desilicated zirconia is at least 99 %.

10. A product comprising or produced using a material as claimed in any one of claims 1 to 4 or a material produced by the method of any one of claims 5 to 9.

European Patent
Office

**EUROPEAN SEARCH REPORT**

Application Number

EP 94 30 5049

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | US-A-4 755 365 (KAWASAKI STEEL CORP.)<br>* column 5, line 10 - line 14 *<br>* column 6, line 13 - line 61; claims 1-9; examples 1-4; tables 4-6 * | 1-4,10 | C04B35/484<br>C01G25/02 |
| A | | 5-9 | |
| X | EP-A-0 157 366 (KAWASAKI STEEL CORP.)<br>* page 9, line 14 - page 11, line 26; claims 1,5,6,8,10; tables 2,3,7,8 * | 1-4,10 | |
| A | | 5-9 | |
| A | US-A-4 288 251 (T. HAGA ET AL.)<br>* claims 1,2; example 1 * | 5-9 | |
| A | US-A-4 746 497 (D.H. JENKINS)<br>* claim 1; examples 1,2 * | 5-9 | |
| | | | TECHNICAL FIELDS SEARCHED (Int.Cl.6) |
| | | | C04B<br>C01G |

The present search report has been drawn up for all claims

| Place of search | Date of completion of the search | Examiner |
|---|---|---|
| THE HAGUE | 13 October 1994 | Luethe, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)